# EUROPEAN PATENT APPLICATION

(11) **EP 3 492 379 A1**
(43) Date of publication of application: **05.06.2019**
(21) Application number: 18000933.4
(22) Date of filing: 30.11.2018
(51) Int. Cl.: B64C 39/02, B64C 25/32

(54) **UNMANNED AERIAL VEHICLE WITH DOCKING MODULE**

(30) Priority: 04.12.2017 PL 42370917
(71) Applicant: Politechnika Slaska, 44-100 Gliwice (PL)
(72) Inventor: Ostrowski, Ziemowit, 44-153 Smolnica (PL); Przybyla, Grzegorz, 41-706 Ruda Slaska (PL); Czyba, Roman, 41-807 Zabrze (PL); Bialecki, Ryszard, 44-121 Gliwice (PL); Górski, Marcin, 44-121 Gliwice (PL); Adamczyk, Wojciech, 43-196 Mikolów (PL)

(57) **Abstract**

The unmanned aerial vehicle with a docking module made up of a supporting structure (1), propulsion motors (2) with rotors (3) and the flight control system (4) is distinguished by the modules of suction cups (5), which are advantageously mounted on the supporting structure of the platform and constitute an integral part of the platform, where the modules of suction cups (5) have bellows (5a) at their ends with a sealing lip (5b) dedicated to a given surface. The modules of suction cups (5) are vacuum powered by means of a pneumatic system located in the ground-based flight control station (7) connected with the unmanned aerial vehicle by means of an elastic pneumatic conduit (8). The unmanned aerial vehicle is executed in the configuration of a vertical take-off and landing multirotor platform, helicopter or airplane.

## Description

The subject of the invention is an unmanned aerial vehicle with a docking module capable of adhering to the surface of any texture and is used especially as a carrier of devices for diagnostics of building structures, carrier of vision systems designed for observation activities.

There are vertical take-off and landing aerial platforms which are able to hover over a given point (e.g. a quadrotor - the design parameters of which ensure the required lifting capacity and which is equipped with the automatic flight control system to ensure a safe and stable flight). Such platforms, however, are not able to adhere to a given surface and thus to hover over a point with their rotors switched off.

In the course of the research it was discovered that suitable docking modules enable the unmanned aerial vehicle to adhere to any kind of surface.

The platform made up of a supporting structure, propulsion motors with rotors and the flight control system according to the invention, is distinguished by the modules of suction cups, which are advantageously mounted on the supporting structure of the platform and constitute an integral part of it. The suction cup modules have bellows at their ends with sealing lips dedicated to a given surface. The suction modules are vacuum powered by means of a pneumatic system located in a ground-based flight control station connected with the unmanned aerial vehicle by means of an elastic pneumatic conduit. The unmanned aerial vehicle having a form of a vertical take-off and landing multirotor platform, helicopter or airplane.

The advantages of the solution according to the invention are the stability of the platform in the adhering phase, lack of necessity to put up the scaffolding or performing work at heights during the diagnostics of large structures with difficult access, lack of necessity to suspend the service provision by infrastructure facilities, e.g. roads and industrial plants during the inspection and diagnostic work. Moreover, it allows performing the observation work freezing into immobility, elimination of vibrations and noise, which are essential during the observation activities, and energy saving by switching off the motors.

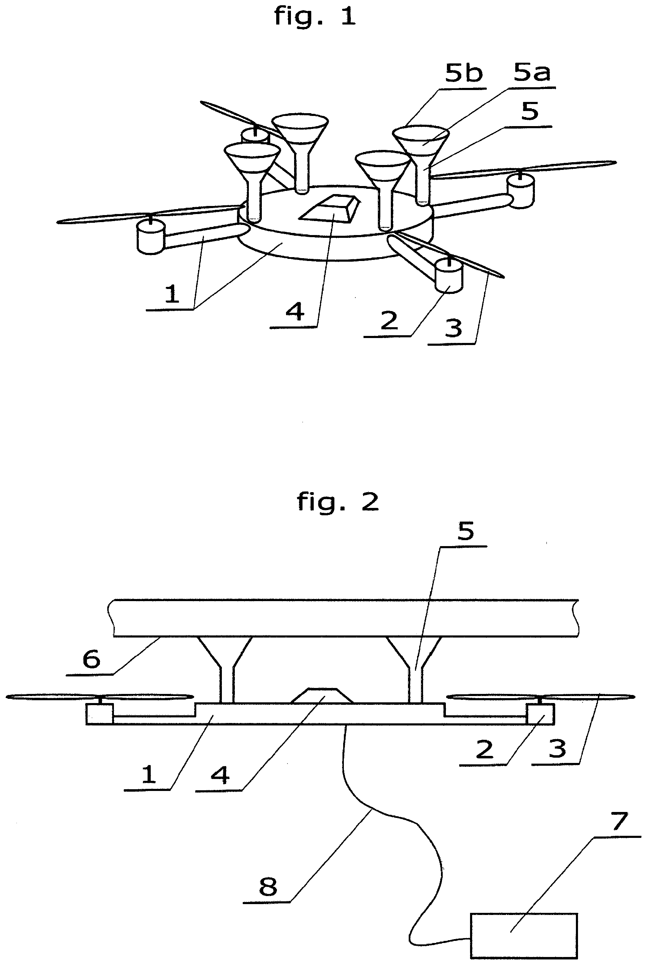

The invention was presented on the drawing in the example of its execution. Fig.1 shows the diagram of the system structure and Fig.2 shows the diagram of attaching the platform with the docking module to the surface and explains its method of operation.

The platform made up of the supporting structure (1), propulsion motors (2) with rotors (3) and the flight control system (4), is distinguished by the modules of suction cups (5) integrated with the structure of the platform, which advantageously enables to attach the supporting structure of the unmanned platform to a surface (6) of any texture (Fig.1). The modules of suction cups (5) are vacuum powered by means of a pneumatic system located in the ground-based flight control station (7) connected with the unmanned aerial vehicle with an elastic pneumatic conduit (8) (Fig.2). The aerial platform is equipped with a system of automatic control (4), which ensures a safe and stable flight to the place of adherence indicated by the operator.

The unmanned aerial vehicle with a module of suction cups (5) is capable of vertical take-off and landing from a small area, getting to the hard-to-reach places and adhering to the other objects (6). After adhering to the surface (6) it is possible to switch off the motors (2) of the aerial platform, which allows eliminating the vibration of the supporting structure (1) caused by the operation of the motors (Fig.2). In conventional solutions the vibrations of the supporting structure (1) bring about a lot of functional problems, e.g. measuring problems, especially at the time of hovering in place. The proposed solution entirely eliminates that problem. Specific properties of the surface (6) to which the aerial platform adheres imposes a necessity to select dedicated modules of pneumatic suction cups (5) with a system of filters. The applied module of suction cups (5) with bellows (5a) and a sealing lip (5b) provides the possibility of controlling the suction force and adhering to the surface (6) of various texture: e.g. uneven or porous one. Activation of the pneumatic system located in the ground-based flight control station (7) connected with the unmanned aerial vehicle by means of an elastic pneumatic conduit (8), generates vacuum pressure in the module of suction cups and as a result the unmanned aerial vehicle adheres to the surface (6).

## Claims

1. The unmanned aerial vehicle with a docking module made up of a supporting structure, propulsion motors with rotors and the flight control system is **characterized in that** the docking module is composed of the suction modules (5) advantageously attached to the supporting structure (1) of the platform and which constitute an integrated part of the platform. The modules of suction cups (5) have bellows (5a) at their ends and are provided with a sealing lip (5b) dedicated to a given type of surface.

2. The unmanned aerial vehicle according to claim 1 wherein said suction cups (5) are **characterized in that** they are vacuum powered by means of a pneumatic system located in the ground-based flight control station (7) connected with the unmanned aerial vehicle by means of an elastic pneumatic conduit (8).

3. The unmanned aerial vehicle according to claim 1 wherein said platform is executed in the configuration of a vertical take-off and landing multirotor platform, helicopter or airplane.
